# EUROPEAN PATENT APPLICATION

(11) **EP 1 650 261 A1**
(43) Date of publication of application: **26.04.2006**
(21) Application number: 04746943.2
(22) Date of filing: 28.06.2004
(51) Int. Cl.: C08L 71/02, C08L 33/06, C08K 5/42, C09K 3/10, F16J 15/14

(54) **CURABLE COMPOSITION**

(30) Priority: 18.07.2003 JP 2003199402
(71) Applicant: KANEKA CORPORATION, Osaka-shi, Osaka 5308228 (JP)
(72) Inventor: TAMAI, Hitoshi, Takasago-shi, Hyogo 676-0078 (JP)
(74) Representative: Brown, Fraser Gregory James
(86) International application number: PCT/JP2004/009474
(87) International publication number: WO 2005/007745

(57) **Abstract**

The present invention provides a curable composition which comprises: Component (A): A polyoxyalkylene polymer containing at least one reactive silyl group at a molecular chain terminus; Component (B): A polymer composed of acrylic acid alkyl ester monomer units and/or methacrylic acid alkyl ester monomer units containing, on the average, at least one reactive silyl group in each molecule; and, Component (C) : An ionic surfactant, and which may be suitably used as a sealant for buildings inhibiting dust/dirt adhesion and hardly allowing traces of rain and like stains to leave thereon.

## Description

### TECHNICAL FIELD

The present invention relates to a curable composition which comprises a reactive silyl group-containing polyoxyalkylene polymer and a polymer composed of acrylic acid alkyl ester monomer units and/or methacrylic acid alkyl ester monomer units containing a reactive silyl group and, in particular, to a curable composition useful in the building industry as a sealant inhibiting dust/dirt adhesion and hardly allowing traces of rain and like stains to leave thereon.

### BACKGROUND ART

Curable compositions in which a reactive silyl group-containing polyoxyalkylene polymer, in particular polyoxypropylene polymer, is used give rubber-like elastomers upon curing and therefore are widely used as sealants. Curable compositions in which a polymer composed of acrylic acid alkyl ester monomer units and/or methacrylic acid alkyl ester monomer units containing a reactive silyl group within the monomer molecule (such polymer is hereinafter referred to as "reactive silyl group-containing acrylic polymer") is further incorporated show improved adhesion and weather resistance and therefore are used as elastic adhesives, sealants for exterior use, and the like.

Such curable compositions based on a mixture of a reactive silyl group-containing polyoxyalkylene polymer and a reactive silyl group-containing acrylic polymer, when used for the purpose of adhesion, are generally required to provide high strength mechanical properties. For attaining such properties, reactive silyl group-containing acrylic polymers whose glass transition temperature (hereinafter Tg) is relatively high are in use.

On the other hand, such curable compositions based on a mixture of a reactive silyl group-containing polyoxyalkylene polymer and a reactive silyl group-containing acrylic polymer, when used as sealants for external wall joints, are required to be elastic in response to the expansions and contractions of the external wall joints for a long period of time and, therefore, low modulus and high elongation mechanical properties are generally required. For obtaining such properties, reactive silyl group-containing acrylic polymers having a relatively low Tg are in use. In this case, however, residual tack (stickiness) tends to remain on the sealant surface after curing. Due to this residual tack, stains resulting from dust/dirt adhesion are often found on the sealant surface. Furthermore, stains like traces of rain due to such dust, dirt or the like carried by rainwater are also sometimes found. In recent years, the deterioration in decorativeness due to such staining of sealants in the external wall joint portions has become an issue. Thus, it is has been desired that a sealant for exterior works on buildings which inhibits dust/dirt adhesion and hardly allows traces of rain and like stains to leave thereon be provided.

As methods for alleviating such drawbacks, several methods have been proposed for inhibiting dust/dirt adhesion by reducing the residual tack. For example, there have been disclosed the method comprising adding an organic silicone polymer (Japanese Kokai Publication Sho-55-21453), the method comprising adding a photocurable substance (Japanese Kokai Publication Sho-55-36241), the method comprising adding a diene-based liquid polymer (Japanese Kokai Publication Hei-01-149851), the method comprising adding a long-chain hydrocarbon group-containing silicon compound (Japanese Kokai Publication Hei-01-188557), the method comprising adding a hydrocarbon type compound (Japanese Kokai Hei-09-53011), and the like. However, these methods still have drawbacks; for example, the physical properties of the cured products may become deteriorated, or certain formulations and/or curing conditions may lead to failure to achieve desired effects.

### SUMMARY OF THE INVENTION

It is an object of the present invention to provide a curable composition useful in the building industry as a sealant inhibiting dust/dirt adhesion and hardly allowing traces of rain and like stains to leave thereon.

The present inventors made intensive investigations in an attempt to accomplish the above object and, as a result, found that when an ionic surfactant is added, a curable composition that inhibits dust/dirt adhesion and hardly allows traces of rain and like stains to leave thereon can be obtained, without deteriorating the physical properties so far attained.

Thus, the present invention relates to curable compositions respectively comprising the components specified below.
(1) A curable composition
   which comprises the following components (A), (B) and (C) :
   Component (A) : A polyoxyalkylene polymer containing at least one reactive silyl group at a molecular chain terminus;
   Component (B) : A polymer composed of acrylic acid alkyl ester monomer units and/or methacrylic acid alkyl ester monomer units containing, on the average, at least one reactive silyl group in each molecule;
   Component (C): An ionic surfactant.
(2) The curable composition according to (1),
   wherein the component (C) ionic surfactant is an anionic surfactant.
(3) The curable composition according to (2),
   wherein the component (C) anionic surfactant is a sulfuric acid ester salt type anionic surfactant.
(4) The curable composition according to (3),
   wherein the component (C) sulfuric acid ester salt type anionic surfactant is a sodium alkyl sulfate type anionic surfactant.
(5) The curable composition according to (2),
   wherein the component (C) anionic surfactant is a fluorine-containing surfactant.
(6) The curable composition according to (5),
   wherein the component (C) fluorine-containing surfactant is a fluorine-containing alkylsulfonic acid salt.
(7) The curable composition according to (1),
   wherein the component (C) ionic surfactant is a cationic surfactant.
(8) The curable composition according to (7),
   wherein the component (C) ionic surfactant is a nitrogen-containing compound.
(9) The curable composition according to any of (1) to (8),
   wherein the content of the component (C) is 0.1 to 20 parts by weight per 100 parts by weight of the sum of the components (A) and (B).
(10) A sealant
   which comprises the curable composition according to any of (1) to (9).

### DETAILED DISCRIPTION OF THE INVENTION

In the polymer main chain in the component (A) according to the invention, the repeating unit represented by the general formula (1):

-R-O- (1)

(wherein R is a divalent alkylene group containing 1 to 4 carbon atoms) can be used. From the ready availability viewpoint, however, a polyoxypropylene polymer in which R is represented by -CH₂CH (CH₃) - is preferred.

The main chain of the component (A) according to the invention, namely the polyoxyalkylene polymer, may be straight or branched or a mixture of these. For attaining high elongation properties, however, a straight main chain is preferred. The component (A) polyoxyalkylene polymer may contain two or more monomer unit species. It is desirable that the content of the repeating unit represented by the general formula (1) in which R is -CH₂CH(CH₃)- in the polymer be not lower than 50% by weight, preferably not lower than 80% by weight, particularly preferably not lower than 90% by weight, since the viscosity of the polyoxyalkylene polymer can then be properly reduced and the resulting cured products can be provided with an adequate level of flexibility.

The methods for producing the polymer main chain in the component (A) according to the invention is not particularly restricted but include, for example, the following methods.
[1] Polymerization using an alkali catalyst such as KOH;
[2] Polymerization using a transition metal compound-porphyrin complex catalyst such as a complex obtained by reacting an organoaluminum compound with porphyrin (cf. e. g. Japanese Kokai Publication Sho-61-215623);
[3] Polymerization using a composite metal cyanide complex catalyst (cf. e.g. Japanese Kokoku Publication Sho-46-27250, Japanese Kokoku Publication Sho-59-15336, U.S. Patent No. 3,278,457, U.S. PatentNo. 3,278,458, U.S. Patent No . 3, 278, 459, U.S. Patent No. 3,427,256, U.S. Patent No. 3,427,334 and U.S. Patent No. 3,427,335);
[4] Polymerization using a phosphazene (cf. e.g. Japanese Kokai Publication Hei-11-60723);
[5] Chain extension of a hydroxyl-terminated polyoxyalkylene polymer with a bifunctional or multifunctional alkyl halide, for example CH₂Cl₂ or CH₂Br₂, in the presence of a basic compound such as KOH, NaOH, KOCH₃ or NaOCH₃;
[6] Chain extension of a hydroxyl-terminated polyoxyalkylene polymer with a bifunctional or trifunctional isocyanate compound.
   Among them, the polymerization method [3] using a composite metal cyanide complex catalyst and the polymerization method [4] using a phosphazene can give high-molecular-weight low-viscosity polyoxyalkylene polymers having a narrow molecular weight distribution and showing almost no discoloration, hence are preferred.
   The introduction of a reactive silyl group terminally into the polyoxyalkylene polymer to give the component (A) according to the invention can be carried out by any of the methods known in the art. Thus, for example, the following methods may be mentioned.
[7] A terminal unsaturated group-containing polyoxyalkylene polymer is obtained by reacting a hydroxyl group- or other functional group-terminated polyoxyalkylene polymer with a compound having an active group reactive with that functional group and further having an unsaturated group, or by copolymerization with an unsaturated group-containing epoxy compound. Then, hydrosilylation is carried out by reacting this terminal unsaturated group with a reactive silyl group-containing hydrosilane compound.
[8] An unsaturated group-containing polyoxyalkylene polymer obtained in the same manner as described above under [7] is reacted with a compound having a mercapto group and a reactive silyl group.
[9] A hydroxyl group-, epoxy group-, isocyanato group- or like functional group (hereinafter, Y functional group)-terminated polyoxyalkylene polymer is reacted with a compound having a functional group (hereinafter, Y' functional group) reactive with that Y functional group and further having a reactive silyl group. The Y' functional group-containing silicon compounds include as specific examples, but are not limited to, amino group-containing silanes such as γ-(2-aminoethyl)aminopropyltrimethoxysilane, γ-(2-aminoethyl)aminopropylmethyldimethoxysilane and γ-aminopropyltriethoxysilane, mercapto group-containing silanes such as γ-mercaptopropyltrimethoxysilane and γ-mercaptopropylmethyldimethoxysilane, epoxysilanes such as γ-glycidoxypropyltrimethoxysilane and β-(3,4-epoxycyclohexyl)ethyltrimethoxysilane, vinyl type unsaturated group-containing silanes such as vinyltriethoxysilane and γ-methacryloyloxypropyltrimethoxysilane, chlorine atom-containing silanes such as γ-chloropropyltrimethoxysilane, isocyanato-containing silanes such as γ-isocyanatopropyltriethoxysilane, γ-isocyanatopropylmethyldimethoxysilane and γ-isocyanatopropyltrimethoxysilane, hydrosilanes such as methyldimethoxysilane, trimethoxysilane, methyldiethoxysilane and triethoxysilane, and the like.

The reactive silyl groups to be introduced terminally into the polyoxyalkylene polymer to give the component (A) according to the invention are not particularly restricted but include, as typical examples, groups represented by the general formula (2):

- [Si (R¹_{2-b}) (X_{b}) O] ₘSi (R²₃₋ₐ) Xₐ (2)

(wherein R¹ and R² each represents an alkyl group containing 1 to 20 carbon atoms, an aryl group containing 6 to 20 carbon atoms, an aralkyl group containing 7 to 20 carbon atoms or a triorganosiloxy group represented by (R')₃SiO- and, when there are two or more R¹ or R² groups, they may be the same or different; R' is a univalent hydrocarbon group containing 1 to 20 carbon atoms and the three R' groups may be the same or different; X represents a hydroxyl group or a hydrolyzable group and, when there are two or more X groups, they may be the same or different; a represents 0, 1, 2 or 3, b represents 0, 1 or 2, and m represents an integer of 0 to 19, provided that the condition a + Σb ≥ 1 should be satisfied).

From the economy viewpoint, for example, the reactive silyl group represented by the general formula (2) is more preferably a group represented by the general formula (3):

-Si (R²_{3-c}) X_{c} (3)

(wherein c represents 0, 1 or 2 and R² and X are as defined above) .

The hydrolyzable groups represented by X in the general formula (2) are not particularly restricted but any of the hydrolyzable groups known in the art can be properly used. Specifically, a hydrogen atom, halogen atoms, alkoxy groups, acyloxy groups, ketoximate groups, amino groups, amido groups, acid amide groups, aminoxy groups, mercapto groups and alkenyloxy groups are preferred. Alkoxy groups such as a methoxy group and an ethoxy group are particularly preferred in view of their moderate hydrolyzability and easy handleability.

One to three such hydrolyzable groups and/or hydroxyl groups can be bound to each silicon atom. The sum (a + Σb) is preferably within the range of 1 to 5. When the reactive silyl group contains two or more hydrolyzable groups and/or hydroxyl groups, they may be the same or different. The reactive silyl group may be formed by one or two or more silicon atoms. In the case of a reactive silyl group formed by connection of silicon atoms via siloxane bonding, for example, the number of silicon atoms may be up to about 20.

The reactive silyl groups are not particularly restricted but include, as specific examples, a trimethyoxysilyl group, a triethoxysilyl group, a triisopropoxysilyl group, a methyldimethoxysilyl group, a methyldiethoxysilyl group, a methyldiisopropoxysilyl group and the like. Among these, a methyldimethoxysilyl group is particularly preferred in view of its reactivity and storage stability, in view of mechanical properties after curing, and the like.

The molecular weight distribution of the component (A) according to the invention is not particularly restricted but, when two polymers have the same molecular weight, the one having a narrower molecular weight distribution has a lower viscosity and, therefore, can give a curable composition improved in workability. In view of this, the molecular weight distribution (Mw/Mn) is preferably not wider than 1.6, more preferably not wider than 1.5, particularly preferably not wider than 1.4.

The number average molecular weight of the component (A) according to the invention is preferably 8, 000 to 50, 000, more preferably 10,000 to 30,000, most preferably 16,000 to 25,000. When the number average molecular weight is lower than 8,000, the elongation at break of the cured products will be insufficient. When it is 50,000 or more, the reactive silyl group concentration becomes too low, probably resulting in decreased curing rates; furthermore, the viscosity of the polymer becomes too high and the handling thereof becomes unfavorably difficult.

Here, the number average molecular weight of the component (A) is defined as the molecular weight corresponding to the number average molecular weight (terminal group-based molecular weight) calculated taking into consideration the direct terminal group concentration determined by the hydroxyl value determination method according to JIS K 1557 and titration analysis based on the principle of the iodine value determination method according to JIS K 0070 as well as the structure (number of terminal groups, determined by the polymerization initiator used) of the polyoxyalkylene polymer. According to a method for relative number average molecular weight determination, it is generally possible to construct a working curve indicating the relation between the polystyrene equivalent molecular weight determined by gel permeation chromatography (GPC) measurements and the above-mentioned terminal group-based molecular weight and then determine the number average molecular weight by converting the molecular weight determined by a GPC measurement to the terminal group-based molecular weight. When the molecular weight of a polymer before reactive silyl group introduction, for example an unsaturated group-containing polyoxyalkylene, is compared with the molecular weight of the polymer after reactive silyl group introduction, there is generally a tendency for the polymer after reactive silyl group introduction to be somewhat higher. Unless the curing of the component (A) progresses, however, there is no great difference between them.

The component (B) according to the invention is a (meth)acrylic acid alkyl ester polymer containing, on the average, at least one reactive silyl group in each molecule as obtained by polymerization of acrylic acid alkyl ester monomer units and/or methacrylic acid alkyl ester monomer units. (The term " (meth) acrylic acid" as used herein indicates acrylic acid and/or methacrylic acid.)

The (meth) acrylic acid alkyl ester units, which are the monomer units of the component (B) according to the invention, can be represented by the general formula (4):

CH₂=C(R³)COOR⁴ (4)

(wherein R³ represents a hydrogen atom or a methyl group and R⁴ represents an alkyl group containing 1 to 30 carbon atoms) .

As the group R⁴ in the above general formula (4), there may be mentioned, for example, a methyl group, an ethyl group, a propyl group, an n-butyl group, a tert-butyl group, a 2-ethylhexyl group, a nonyl group, a lauryl group, a tridecyl group, a cetyl group, a stearyl group, a biphenyl group and the like. One single monomer or two or more monomers represented by the general formula (4) may be used. From the viewpoint of compatibility with the component (A) according to the invention, the use of a monomer in which the alkyl group represented by R⁴ contains 10 or more carbon atoms is preferred. It is not always necessary, however, to use such monomer; the monomer (s) may be selected from among those monomers represented by the general formula (4) in which R⁴ contains 1 to 4 carbon atoms.

As the (meth)acrylic acid alkyl ester monomer units in the component (B) polymer according to the invention, those known in the art can be widely used. For example, there may be mentioned methyl (meth)acrylate, ethyl (meth)acrylate, n-propyl (meth)acrylate, n-butyl (meth)acrylate, isobutyl (meth)acrylate, tert-butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristyl (meth)acrylate, cetyl (meth)acrylate, stearyl (meth)acrylate, behenyl (meth)acrylate, biphenyl (meth)acrylate and the like.

The molecular chain of the component (B) according to the invention is substantially composed of one or two or more (meth) acrylic acid alkyl ester monomer unit species. By saying "substantially composed of such monomer unit species", it is meant that the proportion of the (meth) acrylic acid alkyl ester monomer units occurring in the component (B) is not lower than 50% by weight, preferably not lower than 70% by weight, and the component (B) may contain not only (meth)acrylic acid alkyl ester monomer units but also other monomer units copolymerizable therewith. For example, there may be mentioned acrylic acids such as acrylic acid and methacrylic acid, amido group-containing monomers such as acrylamide, methacrylamide, N-methylolacrylamide and N-methylolmethacrylamide, epoxy group-containing monomers such as glycidyl acrylate and glycidyl methacrylate, amino group-containing monomers such as diethylaminoethyl acrylate, diethylaminoethyl methacrylate and aminoethylethyl vinyl ether, polyoxyethylene group-containing monomers such as polyoxyethylene acrylate and polyoxyethylene methacrylate, and, further, acrylonitrile, styrene, α-methylstyrene, alkyl vinyl ethers, vinyl chloride, vinyl acetate, vinyl propionate, ethylene, and like monomer units.

As for the monomer composition of the component (B) according to the invention, a monomer composition capable of giving a component (B) having a Tg of not higher than 0°C, preferably not higher than -20°C, in cases where the curable composition of the invention is used as a sealant in the building industry, where workability and low modulus and high elongation mechanical properties are required and sealants having a relatively low Tg are used.

Preferred as the component (B) according to the invention from the easy handleability viewpoint are those having a number average molecular weigh of 3,000 to 100,000 as determined by GPC measurements on the polystyrene equivalent basis, and those having a number average molecular weight of 6,000 to 30,000, in particular 8, 000 to 20, 000, are particularly preferred since they can contribute to improvements in elongation properties of cured products and to good weather resistance and workability.

The composition (B) according to the invention can be obtained by an ordinary method for vinyl polymerization, for example. For example, it can be obtained by polymerization by the solution polymerization or bulk polymerization method in the manner of radical reaction or living radical polymerization, but the polymerization method is not particularly restricted thereto. The reaction is generally carried out at 50 to 150°C after charging of the above-mentioned monomer(s), a radical initiator, a solvent, etc.

As examples of the radical initiator, there may be mentioned azo type initiators such as 2,2'-azobisisobutyronitrile, 2,2'-azobis(2-methylbutyronitrile), 4,4'-azobis(4-cyanovaleic acid), 1,1'-azobis(1-cyclohexanecarbonitrile), azobisisobutyramidine hydrochloride and 2,2'-azobis(2,4-dimethylvaleronitrile), and organic peroxide initiators such as benzoyl peroxide and di-tert-butyl peroxide. Azo initiators are preferably used, however, since they are not affected by the solvent used in the polymerization and the possibility of their causing explosion is low, for example.

The polymerization may be carried out in a solvent. Preferred examples of the solvent are inert solvents such as ethers, hydrocarbons and esters.

As for the method for introducing a reactive silyl group into the corresponding polymer to give the component (B) according to the invention, various methods are available. For example, the following methods may be mentioned:
[10] The method comprising copolymerizing a compound containing a polymerizable unsaturated group and a reactive silyl group with a monomer (s) represented by the general formula (4) .
[11] The method comprising copolymerizing a compound containing a polymerizable unsaturated group and a reactive functional group (hereinafter, Z group) (e.g. acrylic acid) with a monomer(s) represented by the general formula (4) and then reacting the copolymer obtained with a compound containing a reactive silyl group and a functional group (hereinafter, Z' group) reactive with the Z group (e.g. a compound containing an isocyanato group and an -Si(OCH₃)₃ group).
[12] The method comprising copolymerizing a monomer or monomers represented by the general formula (4) using a reactive silyl group-containing azobisnitrile compound or disulfide compound as an initiator.
[13] The method comprising copolymerizing a monomer or monomers represented by the general formula (4) in the manner of living radical polymerization and then introducing a reactive silyl group into a molecular chain terminus or termini. The method in question is not particularly restricted to those mentioned above. It is also possible to arbitrarily combine the methods [10] to [13].

The compound containing a polymerizable unsaturated group and a reactive silyl group described above referring to the method [10] can be represented, for example, by the general formula (5):

CH₂=C (R³) COOR⁵- [Si(R¹ _{2-b}) (X_{b}) O] ₘSi (R²₃₋ₐ) Xₐ (5)

(wherein R⁵ represents a bivalent alkylene group containing 1 to 6 carbon atoms and R¹, R², R³, X, a, b and m are as defined above, provided that the conditions a + Σb ≥ 1 should be satisfied), or by the general formula (6):

CH₂=C (R³)-[Si (R¹_{2-b)} (X_{b}) O]ₘSi (R²₃₋ₐ) Xₐ (6)

(wherein R¹, R², R³, X, a, b and m are as defined above, provided that the condition a + Σb ≥ 1 should be satisfied).

When, in each of the above general formulas, there are two or more R¹, R² and/or X groups, they may respectively the same or different.

As the monomers represented by the above general formula (5) or (6), there may be mentioned, for example, γ-methacryloxypropylpolyalkoxysilanes such as γ-methacryloxypropyltrimethoxysilane, γ-methacryloxypropylmethyldimethoxysilane and γ-methacryloxypropyltriethoxysilane, γ-acryloxypropylpolyalkoxysilanes such as γ-acryloxypropyltrimethoxysilane, γ-acryloxypropylmethyldimethoxysilane and γ-acryloxypropyltriethoxysilane, and vinylalkylpolyalkoxysilanes such as vinyltrimethoxysilane, vinylmethyldimethoxysilane and vinyltriethoxysilane, and the like.

The monomers represented by the general formula (5) and general formula (6) may be used singly or two or more of them may be used in combination.

As examples of the Z group and Z' group described above referring to the method [11], there may be mentioned various group combinations. For example, an amino group, an hydroxyl group and a carboxylic acid group maybe mentioned as the Z group, and an isocyanato group may be mentioned as the Z' group. In another example, an allyl group may be mentioned as the Z group and a hydrosilyl group as the Z' group, as described in Japanese Kokai Publication Sho-54-36395, Japanese Kokai Publication Hei-01-272654 and Japanese Kokai Publication Hei-02-214759. In this case, the Z group and Z' group can be bound to each other, for example, by the hydrosilylation reaction in the presence of a transition metal of the group 8.

As examples of the reactive silyl group-containing azobisnitrile compound and disulfide compound described above referring to the method [12], there may be mentioned those alkoxysilyl group-containing azobisnitrile compounds and alkoxysilyl group-containing disulfide compounds disclosed in Japanese Kokai Publication Sho-60-23405 and Japanese Kokai Publication Sho-62-70405.

As for the method described above under [13], the method disclosed in Japanese Kokai Publication Hei-09-272714, for example, can be used.

The number of reactive silyl groups contained in the component (B) is not particularly restricted but preferably is at least one on the average in each molecule of the component (B). From the curability, cost and the like viewpoints, the number is more preferably 1.1 to 5.

As regards the ionic surfactant, namely the component (C) according to the invention, improvements can be attained with respect to the dust adhesion onto the sealant surface by using an anionic surfactant and/or cationic surfactant. As the anionic surfactant, there may be mentioned sulfuric acid ester salt type anionic surfactants and fluorine-containing surfactants.

The sulfuric acid ester salt type anionic surfactants are not particularly restricted but those known in the art can be used. Preferred are those in which the salt-forming ion is sodium, specifically including sodium alkyl sulfates, sodium polyoxyethylene alkyl ether sulfates, sodium polyoxyethylene alkylphenyl ether sulfates, sodium polyoxyethylene alkenyl ether sulfates, sodium polyoxyethylene alkenylphenyl ether sulfates, sodium polyoxyethylene polycyclic phenyl ether sulfates and sodium polyoxyethylene β-naphthyl ester sulfates, and the like. From the viewpoint of inhibition of dust/dirt adhesion and inhibition of rain trace staining, sodium alkyl sulfates are particularly preferred.

As specific examples of such sodium sulfate type anionic surfactants, there may be mentioned, for example, those commercially available under the product names "EMAL" (product of Kao Corporation), "PERSOFT" (product of NOF Corporation), "HITENOL" and "MONOGEN" (products of DAI-ICHI KOGYO SEIYAKU CO., LTD.) , "NEWCOL" (product of Nippon Nyukazai Co., Ltd.) , and the like.

The fluorine-containing anionic surfactants are not particularly restricted but those known in the art can be used. Fluorine-containing alkylsulfonic acid salts are preferred, however, and, from the viewpoint of inhibition of dust/dirt adhesion and inhibition of rain trace staining, those in which the salt-forming ion is an alkali metal or ammonium are particularly preferred. As specific examples, there may be mentioned potassium fluorine-containing alkylsulfonates, sodium fluorine-containing alkylsulfonates, lithium fluorine-containing alkylsulfonates and ammonium fluorine-containing alkylsulfonates.

Specific examples of such fluorine-containing surfactants are, for example, "EF-102" (potassium perfluorooctanesulfonate), "EF-103" (sodium perfluorooctanesulfonate), "EF-105" (lithium perfluorooctanesulfonate) and "EF-104" (ammonium perfluorooctanesulfonate) (all being products of JEMCO Inc.)

Furthermore, the cationic surfactants are not particularly restricted but those known in the art can be used. Nitrogen-containing compounds are preferred, however. Specific examples are long-chain alkyltrimethylammonium halides, alkylbenzylammonium salts, alkylimidazolines and alkylammonium hydroxides. From the viewpoint of inhibition of dust/dirt adhesion and inhibition of rain trace staining, alkylimidazoline compounds are particularly preferred.

As examples of such nitrogen-containing cationic surfactants, there may be mentioned, for example, "QUARTAMIN 24P" (lauryltrimethylammonium chloride), "QUARTAMIN 86P Conc" (stearyltrimethylammonium chloride), "QUARTAMIN 60W" (cetyltrimethylammonium chloride), "QUARTAMIN D86P" (distearyldimethylammonium chloride), "QUARTAMIN D2345P" (dialkyl(C12-18)dimethylammonium chloride) (all being products of Kao Corporation), "TEXNOL R5" (alkylbenzylammonium), "TEXNOL IL55" (alkylimidazoline) and "TEXNOL L7" (alkylammonium hydroxide) (the latter three being products of Nippon Nyukazai Co., Ltd.).

The ionic surfactant, namely the component (C) according to the invention, may comprise one single species or a combination of two or more species. The appearance thereof may be liquid, solid, flaky or powdery.

As for the content proportions of the components (A) , (B) and (C) according to the invention, the component (A): the component (B) ratio on the weight basis is preferably 90:10 to 10:90, more preferably 80:20 to 20:80, and particularly preferably 75:25 to 55:45 from the viewpoint of compatibility between weather resistance and workability, in particular. As for the usage of the component (C), the component (C) is preferably added in an amount of 0.1 to 20 parts by weight per 100 parts by weight of the sum of the components (A) and (B). When the amount of the component (C) is smaller than 0.1 part by weight, the effect of inhibiting dust/dirt adhesion will not be produced and, when it is larger than 20 parts by weight, the weather resistance will decrease and the effect of inhibiting dust/dirt adhesion will be lessened by bleeding out of the component (C) onto the cured product surface.

The curable composition of the invention is crosslinked and cured under siloxane bond formation in the presence of one of various condensation catalysts known in the art. As for the properties of the cured products, rubber-like ones to resin-like ones can be widely produced depending on the molecular weight of the polymers and the main chain skeletons.

As such condensation catalysts, there may be mentioned, for example, tetravalent tin compounds such as dibutyltin dilaurate, dibutyltin diacetate, dibutyltin diethylhexanolate, dibutyltin dioctoate, dibutyltin dimethyl maleate, dibutyltin diethyl maleate, dibutyltin dibutyl maleate, dibutyltin diisooctyl maleate, dibutyltin ditridecyl maleate, dibutyltin dibenzyl maleate, dibutyltin maleate, dioctyltin diacetate, dioctyltin distearate, dioctyltin dilaurate, dioctyltin diethyl maleate and dioctyltin diisooctyl maleate, bivalent tin compounds such as stannous octylate, stannous naphthenate, stannous stearate and stannous versatate, monoalkyltins, for example monobutyltin compounds such as monobutyltin trisoctoate and monobutyltin triisopropoxide and monooctyltin compounds, titanate esters such as tetrabutyl titanate and tetrapropyl titanate, organoaluminum compounds such as aluminum trisacetylacetonate, aluminum tris(ethyl acetoacetate) and diisopropoxyaluminum ethyl acetoacetate, carboxylic acid (e.g. 2-ethylhexanoic acid, neodecanoic acid, versatic acid, oleic acid, naphthenic acid) metal salts, such as bismuth carboxylates, iron carboxylates, titanium carboxylates, lead carboxylates, vanadium carboxylates, zirconium carboxylates, calcium carboxylates, potassium carboxylates, barium carboxylates, manganese carboxylates, cerium carboxylates, nickel carboxylates, cobalt carboxylates, zinc carboxylates and aluminum carboxylates, or products of reaction and mixtures of these with an amine compound (to be described later herein) such as laurylamine, chelate compounds such as zirconium tetraacetylacetonate and titanium tetraacetylacetonate, aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine and cyclohexylamine, aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine and butylstearylamine, aliphatic tertiary amines such as triamylamine, trihexylamine and trioctylamine, aliphatic unsaturated amines such as triallylamine and oleylamine, aromatic amines such as laurylaniline, stearylaniline and triphenylamine, and, as other amines, such amine compounds as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo[5.4.0]undecene-7 (DBU), or salts of these amine compounds with carboxylic acids, products of reaction and mixtures of an amine compound with an organotin compound, for example products of reaction and mixtures of laurylamine with stannous octylate, low-molecular-weight polyamide resins obtained from an excess of a polyamine and a polybasic acid, products of reaction of an excess of a polyamine with an epoxy compound, γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl) aminopropyltrimethoxysilane, N-(β-aminoethyl) aminopropylmethyldimethoxysilane, N-(β-aminoethyl) aminopropyltriethoxysilane, N-(β-aminoethyl) aminopropylmethyldiethoxysilane, N-(β-aminoethyl) aminopropyltriisopropoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane, and the like. As other examples, there may be mentioned such silanol condensation catalysts as modification derivatives of these, for example amino-modified silylpolymers, silylated aminopolymers, unsaturated aminosilane complexes, phenylamino-long chain alkylsilanes, aminosilylated silicones and like amino group-containing silane coupling agents, and, further, other silanol condensation catalysts known in the art, for example fatty acids such as versatic acid, organic acidic phosphate ester compounds and other acidic catalysts and basic catalysts, and the like. The organic acidic phosphate ester compounds as acidic catalysts include, but are not limited to, (CH₃O)₂-P (=O) (-OH) , (CH₃O) -P (=O) (-OH) ₂, (C₂H₅O) ₂-P (=O) (-OH) , (C₂H₅O) -P (=O) (-OH) ₂, (C₃H₇O) ₂-P (=O) (-OH) , (C₃H₇O) -P (=O) (-OH)₂, (C₄H₉O)₂-P (=O) (-OH) , (C₄H₉O) -P (=O) (-OH) ₂, (C₈H₁₇O)₂-P (=O) (-OH) , (C₈H₁₇O) -P (=O) (-OH)₂, (C₁₀H₂₁O)₂-P (=O) (-OH) , (C₁₀H₂₁O) -P (=O) (-OH) ₂, (C₁₃H₂₇O) ₂-P (=O) (-OH) , (C₁₃H₂₇O) -P (=O) (-OH) ₂, (C₁₆H₃₃O) ₂-P (=O) (-OH) , (C₁₆H₃₃O) -P (=O) (-OH) ₂, (HO-C₆H₁₂O) ₂-P (=O) (-OH) , (HO-C₆H₁₂O) -P (=O) (-OH) ₂, (HO-C₈H₁₆O) -P (=O) (-OH) , (HO-C₈H₁₆O) -P (=O) (-OH) ₂, [(CH₂OH) (CHOH) O] ₂-P (=O) (-OH) , [(CH₂OH) (CHOH)O] -P (=O) (-OH) ₂, [(CH₂OH) (CHOH) C₂H₄O]₂-P (=O) (-OH) , [(CH₂OH) (CHOH) C₂H₄O]-P (=O) (-OH)₂, and the like.

Such systems in which an organic acid and an amine are used in combination are more preferred, since their catalytic activity is high, hence the addition level thereof can be reduced. Among the organic acid-amine combination systems, those systems which comprise an acidic phosphate ester and an amine, an organic carboxylic acid and an amine or, in particular, an organic acid phosphate ester and an amine or an aliphatic carboxylic acid and an amine are higher in catalytic activity and, therefore, are preferred from the fast curing viewpoint.

These catalysts may be used singly or two or more of them maybe used in combination. The condensation catalyst addition level is preferably about 0.01 to 20 parts by weight, more preferably 0.5 to 5 parts by weight, per 100 parts by weight of the sum of the components (A) and (B) according to the invention. When the silanol condensation catalyst addition level is lower than this range, the curing rate may become retarded and, in some instances, the curing hardly proceeds to a sufficient extent. On the other hand, when the silanol condensation catalyst addition level exceeds the above range, local heat generation and/or foaming may occur in the step of curing, hence it will become difficult to obtain good cured products; in addition, the pot life will become excessively short and this is unfavorable from the workability viewpoint. Although there is no particular restriction, tin-based curing catalysts give favorable results since the curability can be easily controlled with them.

It is also possible to use, in the curable composition of the invention, any of the above-mentioned amino group-containing silane coupling agents as a promoter so that the condensation catalyst activity may further be increased, like the amine compounds. This amino group-containing silane coupling agent is a compound containing a hydrolyzable silyl group(s) and an amino group, and the hydrolyzable silyl group includes those groups already given hereinabove and, from the rate of hydrolysis viewpoint, a methoxy group, an ethoxy group and the like groups are preferred. The number of hydrolyzable silyl groups is preferably not less than 2, in particular not less than 3.

The addition level of these amine compounds is preferably about 0.01 to 50 parts by weight, more preferably 0.1 to 20 parts by weight, per 100 parts by weight of the sum of the components (A) and (B) according to the invention. When the amine compound addition level is lower than this range, the curing rate may become retarded and, in some instances, the curing hardly proceeds to a sufficient extent. On the other hand, when the amine compound addition level exceeds the above range, the pot life becomes excessively short in certain instances and this is unfavorable from the workability viewpoint.

These amine compounds may be used singly or two or more of them may be used in admixture.

Furthermore, a silicon compound having no amino group or silanol group may be added as a promoter. Such silicon compounds are not particularly restricted but preferably are phenyltrimethoxysilane, phenylmethyldimethoxysilane, phenyldimethylmethoxysilane, diphenyldimethoxysilane, diphenyldiethoxysilane, triphenylmethoxysilane, for example. In particular, diphenyldimethoxysilane and diphenyldiethoxysilane are inexpensive and readily available, hence are most preferred.

The addition level of such silicon compound is preferably about 0.01 to 20 parts by weight, more preferably 0.1 to 10 parts by weight, per 100 parts by weight of the sum of the components (A) and (B) according to the invention. When the silicon compound addition level is lower than this range, the effect of promoting the curing may be insignificant in certain instances. On the other hand, when the silicon compound addition level exceeds this range, the hardness and/or tensile strength of cured products may become lower.

In the practice of the invention, the curability and mechanical properties, for example, can be controlled according to the intended purpose and/or use by selecting the curing catalyst/curing agent species and the addition level thereof. It is also possible to vary the curing catalyst/curing agent species and the addition level thereof according to the reactivity of the reactive silyl group (s) in the component (A) according to the invention and, when such reactivity is high, an addition level in the low range of 0.01 to 1 part by weight can bring about a sufficient extent of curing.

A silane coupling agent and/or an adhesion promoter other than silane coupling agents may be incorporated in the curable composition of the invention. By adding an adhesion promoter, it becomes possible to further reduce the possibility that the sealant will peel off from the adherend, such as a siding board, as a result of changes in joint width due to external forces. In some cases, it becomes unnecessary to use a primer for improving the adhesion; simplification of construction works is thus expected. As specific examples of the silane coupling agent, there may be mentioned silane coupling agents containing such a functional group as an amino group, a mercapto group, an epoxy group, a carboxyl group, a vinyl group, an isocyanato group or an isocyanurate group or a halogen atom, specifically including isocyanato group-containing silanes such as γ-isocyanatopropyltrimethoxysilane, γ-isocyanatopropyltriethoxysilane, γ-isocyanatopropylmethyldiethoxysilane and γ-isocyanatopropylmethyldimethoxysilane, amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane and N-vinylbenzyl-γ-aminopropyltriethoxysilane, mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane, epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane, carboxysilanes such as β-carboxyethyltriethoxysilane, β-carboxyethylphenylbis (2-methoxyethoxy) silane, N-β-(carboxymethyl)aminoethyl-y-aminopropyltrimethoxysilane, vinylic unsaturated group-containing silanes such as vinyltrimethoxysilane, vinyltriethoxysilane, γ-methacryloyloxypropylmethyldimethoxysilane and γ-acryloyloxypropylmethyltriethoxysilane, halogen-containing silanes such as γ-chloropropyltrimethoxysilane, isocyanuratosilanes such as tris(trimethoxysilyl)isocyanurate, and the like. Modification derivatives of these, for example amino-modified silyl polymers, silylated aminopolymers, unsaturated aminosilane complexes, phenylamino-long chain alkylsilanes, aminosilylated silicones, blocked isocyanatosilanes, silylated polyesters and the like, can also be used as silane coupling agents.

The silane coupling agent addition level is within the range of 0.1 to 20 parts by weight per 100 parts by weight of the component (A) according to the invention. In particular, the use within the range of 0.5 to 10 parts by weight is preferred. The silane coupling agent added to the curable composition of the invention, when the composition is applied to various adherends, produces a marked adhesion improving effect under nonprimer conditions or primer treatment conditions. In the case of use under nonprimer conditions, the effect of improving the adhesion to various adherends is particularly significant.

Other examples of the adhesion promoter other than silane coupling agents are not particularly restricted but include, for example, epoxy resins, phenol resins, sulfur, alkyl titanates, aromatic polyisocyanates and the like.

Such adhesion promoters as mentioned above may be used singly or two or more of them may be used in admixture.

One or more of various plasticizers may be incorporated in the curable composition of the invention, if necessary. The use of a plasticizer in combination with a filler, which is described later herein, can make it possible to increase the elongation of cured products and/or incorporate a large amount of a filler in the curable composition, hence is advantageous. The use of a plasticizer is not always necessary, however. The plasticizers are not particularly restricted but may be selected from among the following ones according to the purpose of adjusting physical and other properties: phthalate esters such as dibutyl phthalate, diheptyl phthalate, di(2-ethylhexyl)phthalate and butyl benzyl phthalate, nonaromatic dibasic acid esters such as dioctyl adipate, dioctyl sebacate, dibutyl sebacate and isodecyl succinate, aliphatic esters such as butyl oleate and methyl acetylricinoleate, polyalkylene glycol esters such as diethylene glycol dibenzoate, triethylene glycol dibenzoate and pentaerythritol esters, phosphate esters such as tricresyl phosphate and tributyl phosphate, trimellitate esters, polystyrenes such as polystyrene and poly-α-methylstyrene, polybutadiene, polybutene, polyisobutylene, butadiene-acrylontirile copolymers, polychloroprene, chlorinated paraffins, alkyldiphenyls, partially hydrogenated terphenyl and like hydrocarbon oils, process oils, polyethers including polyether polyols such as polyethylene glycol, polypropylene glycol and polytetramethylene glycol and derivatives of such polyether polyols as resulting from conversion of the hydroxyl group (s) thereof to an ester group, an ether group or like group, epoxy plasticizers such as epoxidized soybean oil and benzyl epoxystearate, polyester type plasticizers obtained from a dibasic acid such as sebacic acid, adipic acid, azelaic acid or phthalic acid and a dihydric alcohol such as ethylene glycol, diethylene glycol, triethylene glycol, propylene glycol or dipropylene glycol, acrylic plasticizers, other vinyl polymers obtained by polymerizing a vinyl monomer (s) by various methods of polymerization, and the like.

By adding a high-molecular-weight plasticizer, which is a polymer having a number average molecular weight of 500 to 15, 000, it becomes possible to adjust the viscosity and/or slump tendency of the curable composition as well as the mechanical properties, such as tensile strength and elongation, of the cured products obtained by curing that composition and, further, as compared with the cases where a low-molecular-weight plasticizer containing no polymer component within the molecule is used, it becomes possible to maintain the initial physical properties for a long period of time and improve the drying properties (also referred to as coatability properties) of an alkyd paint applied to the above-mentioned cured products. This high-molecular-weight plasticizer may have a functional group(s) or may not have any functional group, without any limitation.

The number average molecular weight of the above-mentioned high-molecular-weight plasticizer, which may be within the range of 500 to 15,000, as mentioned above, is preferably 800 to 10, 000, more preferably 1, 000 to 8, 000. When the molecular weight is too low, the plasticizer will flow out upon exposure to heat and/or rain with the lapse of time, failing to maintain the initial physical properties for a long period of time and, further, the coatability with alkyds cannot be improved. When the molecular weight is excessively high, the viscosity increases, and the workability deteriorates.

Among the high-molecular-weight plasticizers mentioned above, polyether-based plasticizers and (meth)acrylic acid alkyl ester-based polymer plasticizers are preferred from the viewpoints of high elongation properties and high weather resistance. As for the method for synthesizing such (meth)acrylic acid alkyl ester polymers, those obtained by solution polymerization in the conventional manner and solventless acrylic polymers, for example, may be mentioned. The latter acrylic plasticizers are produced by high-temperature continuous polymerization techniques using neither solvent nor chain transfer agent (cf. U.S. Patent No. 4,414,370, Japanese Kokai Publication Sho-59-6207, Japanese Kokoku Publication Hei-05-58005, Japanese Kokai Publication Hei-01-313522, U.S. Patent No. 5,010,166). Examples thereof include, but are not particularly limited to, Toagosei Chemical Industries Ltd.'s "UP series" species (cf. Kogyo Zairyo, October, 1999), and the like. Mention may of course be made of the living radical polymerization technique as another method of synthesis. This technique is preferred, since it can give polymers with a narrow molecular weight distribution and a reduced viscosity and, furthermore, the atom transfer radical polymerization technique is more preferred, although the polymerization technique is not limited to those mentioned above.

The molecular weight distribution of the high-molecular-weight plasticizer is not particularly restricted but, from the viscosity viewpoint, it is preferably narrow, namely lower than 1.8, more preferably not higher than 1.7, still more preferably not higher than 1.6, particularly preferably not higher than 1.4, most preferably not higher than 1.3.

The plasticizers, including the high-molecular-weight plasticizers mentioned above, may be used singly or two or more of them may be used in combination, although the use thereof is not always necessary. If necessary, it is also possible to use a high-molecular-weight plasticizer and, further, a low-molecular-weight plasticizer in combination unless the physical properties are adversely affected.

The incorporation of such a plasticizer(s) may also be done on the occasion of polymer production.

When a plasticizer is used, the amount thereof is not particularly restricted but generally 5 to 150 parts by weight, preferably 10 to 120 parts by weight, more preferably 20 to 100 parts by weight, per 100 parts by weight of the sum of the components (A) and (B) according to the invention. When it is smaller than 5 parts by weight, the plasticizing effect is hardly produced and, when it exceeds 150 parts by weight, the mechanical strength of cured products tend to become insufficient.

In the curable composition of the invention, there may be incorporated one or more of various fillers, according to need. The fillers are not particularly restricted but include reinforcing fillers such as wood flour, pulp, cotton chips, asbestos, glass fibers, carbon fibers, mica, walnut shell flour, rice hull flour, graphite, diatomaceous earth, china clay, silica (e.g. fumed silica, precipitated silica, crystalline silica, fused silica, dolomite, silicic anhydride, hydrous silicic acid) and carbon black, fillers such as ground calcium carbonate, colloidal calcium carbonate, magnesium carbonate, diatomaceous earth, calcined clay, clay, talc, titanium oxide, bentonite, organic bentonite, ferric oxide, red iron oxide, fine aluminum powder, flint powder, zinc oxide, activated zinc white, zinc powder, zinc carbonate and shirasu balloons, fibrous fillers such as asbestos, glass fibers and glass filaments, carbon fibers, Kevlar fibers and polyethylene fibers, and the like.

Preferred among these fillers are precipitated silica, fumes silica, crystalline silica, fused silica, dolomite, carbon black, calcium carbonate, titanium oxide, talc and the like.

In particular when low-strength, high-elongation cured products are to be obtained using such fillers, one or more fillers selected from among titanium oxide, calcium carbonate, talc, ferric oxide, zinc oxide, shirasu balloons and the like may be added. Generally, calcium carbonate, when small in specific surface area, may be insufficiently effective at improving the strength at break, elongation at break, adhesion and weather-resistant adhesion of cured products. As the specific surface area value increases, the effects of improving the strength at break, elongation at break, adhesion and weather-resistant adhesion become better.

Furthermore, calcium carbonate is more preferably surface-treated with a surface treating agent. When surface-treated calcium carbonate is used, it is expected that the workability of the curable composition of the invention be improved and the effects of improving the adhesion and weather-resistant adhesion of the curable composition be more improved as compared with the use of non-surface-treated calcium carbonate. Useful as the surface treating agent are organic substances such as fatty acids, fatty acid soaps and fatty acid esters, various surfactants, and various coupling agents such as silane coupling agents and titanate coupling agents. Specific examples include, but are not limited to, fatty acids such as caproic acid, caprylic acid, pelargonic acid, capric acid, undecanoic acid, lauric acid, myristic acid, palmitic acid, stearic acid, behenic acid and oleic acid, sodium, potassium and other salts of such fatty acids, and alkyl esters of such fatty acids. As specific examples of the surfactants, there may be mentioned sulfate ester type anionic surfactants such as polyoxyethylene alkyl ether sulfate esters and long-chain alcohol sulfate esters, and sodium, potassium and other salts thereof, sulfonic acid type anionic surfactants such as alkylbenzenesulfonic acids, alkylnaphthalenesulfonic acids, paraffinsulfonic acids, α-olefinsulfonic acids and alkylsulfosuccinic acid, and sodium, potassium and other salts thereof, and the like. In the surface treatment, the surface treating agent is used in an amount preferably within the range of 0.1 to 20% by weight, more preferably within the range of 1 to 5% by weight, relative to calcium carbonate. When the amount for treatment is smaller than 0.1% by weight, the effects of improving the workability, adhesion and weather-resistant adhesion may be insufficient and, when it exceeds 20% by weight, the storage stability of the curable composition may decrease.

When calcium carbonate is used in expectation of producing the effects of improving the thixotropic properties of the formulations and the strength at break, elongation at break, adhesion, weather-resistant adhesion and the like, in particular, colloidal calcium carbonate is preferably used, although this does not mean any particular restriction.

On the other hand, ground calcium carbonate is sometimes added for the purpose of reducing the viscosity of the formulations, increasing the weight thereof and reducing the cost, for example. When ground calcium carbonate is used, such species as mentioned below can be used.

Ground calcium carbonate is prepared from natural chalk, marble, limestone or the like by mechanical grinding/processing. The method of grinding includes the dry method and wet method. Wet ground products are unfavorable in many cases since they often deteriorate the storage stability of the curable composition of the invention. Upon classification, ground calcium carbonate gives various products differing in average particle size. In cases where the effects of improving the strength at break, elongation at break, adhesion and weather-resistant adhesion are expected, the specific surface area value is preferably 1.5 to 50 m²/g, more preferably 2 to 50 m²/g, still more preferably 2.4 to 50 m²/g, most preferably 3 to 50 m²/g, although this does not mean any particular restriction. When the specific surface area is smaller than 1.5 m²/g, those improving effects may be insufficient. Of course, the above does not apply to the cases where it is only intended to reduce the viscosity and/or increase the weight.

The specific surface area value is the measured value obtained by using, as the measurement method, the air permeation method (method for specific surface area determination based on the permeability of a powder-packed layer to air) carried out according to JIS K 5101. Preferred for use as the measuring instrument is a Shimadzu model SS-100 specific surface area measuring apparatus.

Those fillers may be used singly or two or more of them may be used in combination according to the intended purpose or necessity. For example, the combined use, according to need, of ground calcium carbonate having a specific surface area value of not smaller than 1.5 m²/g and colloidal calcium carbonate is fully expected to suppress the viscosity increase in the formulations to a moderate level and produce the effects of improving the strength at break, elongation at break, adhesion and weather-resistant adhesion of cured products, although this does not mean any particular restriction.

When a filler is used, the filler is preferably used in an amount within the range of 5 to 1, 000 parts by weight, more preferably within the range of 20 to 500 parts by weight, particularly preferably within the range of 40 to 300 parts by weight, per 100 parts by weight of the sum of the components (A) and (B) according to the invention. When the addition level is lower than 5 parts by weight, the effects of improving the strength at break, elongation at break, adhesion and weather-resistant adhesion may be insufficient and, when the amount exceeds 1,000 parts by weight, the workability of the curable composition may deteriorate. Those fillers may be used singly or two or more of them may be used in combination.

Furthermore, for the purpose of reducing the weight and cost without causing significant deteriorations in physical properties, hollow microspheres may be used in combination with such a reinforcing filler as mentioned above.

Such hollow microspheres (hereinafter referred to as "balloons") are not particularly restricted but include, for example, hollow spheres constituted of an inorganic or organic material and having a diameter of not greater than 1 mm, preferably not greater than 500 µm, more preferably not greater than 200 µm, as described in "Kinosei Fira no Saishin Gijutsu (Latest Technology of Functional Fillers)" (CMC Publishing CO., LTD). In particular, hollow microspheres having a true specific gravity of not higher than 1.0 g/cm³ are preferably used and, more preferably, hollow microspheres having a true specific gravity of not higher than 0.5 g/cm³ are used.

The inorganic balloons include silicic balloons and non-silicic balloons. Examples of the silicic balloons are shirasu balloons, perlite, glassballoons, silica balloons, fly ash balloons and the like, and examples of the non-silicic balloons are alumina balloons, zirconia balloons, carbon balloons and the like. Commercially available as specific examples of such inorganic balloons are Idichi Chemical, Ltd' s Winlite and Sanki Kogyo Co., Ltd.'s Sankilite (shirasu balloons), Nippon Sheet Glass Co., Ltd.'s Calloon, Sumitomo 3M Limited's Cel-Star Z-28, Emerson & Cuming Company's Micro Balloon, Pittsburgh Corning Corporation's Celamic Glassmodules and Sumitomo 3M Limited's Glass Bubbles (glass balloons), Asahi Glass Co., Ltd.' Q-Cel and Taiheiyo Cement Corporation's E-Spheres (silica balloons), Pfamarketing's Cerospheres and Fillite U.S.A.'s Fillite (fly ash balloons), Showa Denko K.K.' s BW (alumina balloons), Zircoa Inc.'s Hollow Zirconium Spheres (zirconia balloons), and Kureha Chemical Industry's Kurekasphere and General Technologies Inc.' Carbosphere (carbon balloons).

The organic balloons include thermosetting resin balloons and thermoplastic resin balloons. Examples of the thermosetting resin balloons are phenol balloons, epoxy balloons and urea balloons, and examples of the thermoplastic balloons are Saran balloons, polystyrene balloons, polymethacrylate balloons, polyvinyl alcohol balloons and styrene-acrylic type balloons. Crosslinked thermoplastic resin balloons can also be used. The balloons so referred to herein may be balloons after expansion or balloons produced by expansion following incorporation of a blowing agent-containing resin.

As specific examples of such organic balloons which are commercially available, there may be mentioned Union Carbide Corporation's Ucar and Phenolic Microballoons (phenol balloons), Emerson & Cuming Company's Eccospheres (epoxy balloons), Emerson & Cuming Company's Eccospheres VF-O (urea balloons), Dow Chemical Company's Saran Microspheres, Janan Fillite Co., Ltd.'s Expancel and Matsumoto Yushi Seiyaku Co., Ltd.' s Matsumoto Microspheres (Saran balloons), Arco Polymers Inc.'s Dylite Expandable Polystyrene and BASF-Wyandotte's Expandable Polystyrene Beads (polystyrene balloons), and JSR Corporation's SX863(P) (crosslinked styrene-acrylic balloons).

The above-mentioned balloon species may be used singly or two or more of them may be used in admixture. Furthermore, those balloons surface-treated with a fatty acid, a fatty acid ester, rosin, rosin acid lignin, a silane coupling agent, a titan coupling agent, an aluminum coupling agent, polypropylene glycol or the like for improving the dispersibility and the workability of the formulations may also be used. These balloons are used for reducing the weight and cost without impairing the flexibility and extension/strength among the physical properties after curing of the formulations containing them.

The balloon content is not particularly restricted but the balloons can be used preferably in an amount within the range of 0.1 to 50 parts by weight, more preferably 0.1 to 30 parts by weight, per 100 parts by weight of the sum of the components (A) and (B) according to the invention. When this amount is smaller than 0.1 part by weight, the weight-reducing effect is slight and, when it exceeds 50 parts by weight, decreases in tensile strength, among the mechanical properties after curing of the balloon-containing formulations, are observed in some instances. When the balloons have a specific gravity of not lower than 0.1, the amount is preferably 3 to 50 parts by weight, more preferably 5 to 30 parts by weight.

In the curable composition of the invention, there may be incorporated a physical property modifier capable of adjusting the tensile properties of the resulting cured products, according to need.

The physical property modifiers are not particularly restricted but include, for example, alkylakoxysilanes such as methyltrimethoxysilane, dimethyldimethoxysilane, trimethylmethoxysilane and n-propyltrimethoxysilane, alkylisopropenoxysilanes such as dimethyldiisopropenoxysilane, methyltriisopropenoxysilane, γ-glycidoxypropylmethyldiisopropenoxysilane, functional group-containing alkoxysilanes such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane, silicone varnishes, polysiloxanes and the like. By using such as a physical property modifier, it is possible to increase the hardness of the cured products after curing of the curable composition of the invention or decrease such hardness and attain extensibility. Such physical property modifiers as mentioned above may be used singly or two or more of them may be used in combination.

If necessary, a silanol-containing compound may be added to the curable composition of the invention to modify the physical properties of cured products, for example. The term "silanol-containing compound" refers to a compound containing one silanol group within the molecule and/or a compound forming a compound containing one silanol group within the molecule upon reaction with moisture. One of these compounds may be used or both the compounds may be used simultaneously.

The compounds containing one silanol group within the molecule (one of the silanol-containing compounds) are not particularly restricted but include, as examples, compounds that can be represented by (R")₃SiOH (in which the three R" symbols are the same or different and each represents a substituted or unsubstituted alkyl group or aryl group), for example (CH₃)₃SiOH, (CH₃CH₂)₃SiOH, (CH₃CH₂CH₂)₃SiOH, (n-Bu)₃SiOH, (sec-Bu)₃SiOH, (tert-Bu)₃SiOH, (tert-Bu)Si(CH₃)₂OH, (C₅H₁₁)₃SiOH, (C₆H₁₃)₃SiOH, (C₆H₅)₃SiOH, (C₆H₅)₂Si (CH₃) OH, (C₆H₅)Si(CH₃)₂OH, (C₆H₅)₂Si(C₂H₅)OH, C₆H₅Si(C₂H₅)₂OH, C₆H₅CH₂Si (C₂H₅) ₂OH and C₁₀H₇Si (CH₃) ₂OH (in the above formulas, C₆H₅ represents a phenyl group and C₁₀H₇ represents a naphthyl group) . Among them, (CH₃)₃SiOH which is readily available and has a low molecular weight, and the like are preferred from the curability viewpoint.

Supposedly, the compound containing one silanol group within the molecule reacts with the reactive silyl group of the reactive silyl group-containing polymer or the siloxane bond formed upon crosslinking to thereby reduce the number of crosslinks and provide the cured products with flexibility.

The compounds capable of forming a compound containing one silanol group within the molecule upon reaction with moisture are not particularly restricted. They include, but are not limited to, N,O-bis(trimethylsilyl)acetamide, N- (trimethylsilyl) acetamide, bis(trimethylsilyl)trifluoroacetamide, N-methyl-N-trimethylsilyltrifluoroacetamide, bistrimethylsilylurea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilyl phenoxide, n-octanol-derived trimethylsilylation product, 2-ethylhexanol-derived trimethylsilylation product, glycerol-derived tris(trimethylsilyl) compound, trimethylolpropane-derived tris(trimethylsilyl) compound, pentaerythritol-derived tris(trimethylsilyl) compound, pentaerythritol-derived tetra(trimethylsilyl) compound, (CH₃)₃SiNHSi (CH₃)₃, (CH₃)₃SiNSi (CH₃)₂, allyloxytrimethylsilane, N,O-bis (trimethylsilyl) acetamide, N-(trimethylsilyl)acetamide, bis(trimethylsilyl)trifluoroacetamide, N-methyl-N-trimethylsilyltrifluoroacetamide, bistrimethylsilylurea, N-(tert-butyldimethylsilyl)-N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilyl phenoxide, n-octanol-derived trimethylsilylation product, 2-ethylhexanol-derived trimethylsilylation product, glycerol-derived tris(trimethylsilyl) compound, trimethylolpropane-derived tris(trimethylsilyl) compound, pentaerythritol-derived tris(trimethylsilyl) compound, pentaerythritol-derived tetra(trimethylsilyl) compound, N,O-bis(trimethylsilyl)acetamide, N-(trimethylsilyl)acetamide, trimethylsilyl phenoxide, n-octanol-derived trimethylsilylation product, 2-ethylhexanol-derived trimethylsilylation product, glycerol-derived tris(trimethylsilyl) compound, trimethylolpropane-derived tris(trimethylsilyl) compound, pentaerythritol-derived tris(trimethylsilyl) compound, pentaerythritol-derived tetra(trimethylsilyl) compound, and the like. These may be used singly or two or more of them may be used in combination.

The compound capable of forming a compound containing one silanol group within the molecule upon reaction with moisture, when allowed to react during storage, on the occasion of curing or after curing, with moisture, forms the compound containing one silanol group within the molecule. Supposedly, the thus-formed compound containing one silanol group within the molecule reacts with the reactive silyl group in the reactive silyl group-containing polymer or the siloxane bond formed upon crosslinking, as mentioned above, to thereby reduce the number of crosslinks and provide the cured products with flexibility.

The addition level of the silanol-containing compound can be properly adjusted according to the desired physical properties of the cured products. The silanol-containing compound can be added in an amount of 0.1 to 50 parts by weight, preferably 0.3 to 20 parts by weight, more preferably 0.5 to 10 parts by weight, per 100 parts by weight of the sum of the components (A) and (B) according to the invention. At levels below 0.1 part by weight, any effects of the addition will not be produced and, at levels exceeding 50 parts by weight, the crosslinking becomes insufficient and the strength and/or gel fraction of the cured products lowers.

The time of addition of the silanol-containing compound is not particularly restricted but the compound may be added on the occasion of polymer production or on the occasion of curable composition compounding.

If necessary, a thixotropic agent (antisagging agent) may be added to the curable composition of the invention to prevent sagging and improve the workability.

The antisagging agents are not particularly restricted but include, for example, polyamide waxes, hydrogenated castor oil derivatives, metal soaps such as calcium stearate, aluminum stearate and barium stearate, and the like. These thixotropic agents (antisagging agent) may be used singly or two or more of them may be used in combination.

To the curable composition of the invention, there may be added a photocurable substance, according to need. The photocurable substance is a substance whose molecular structure undergoes a chemical change in a short time under the action of light and which thus causes changes of physical properties such as curing. By adding such photocurable substance, it becomes possible to reduce the tackiness (stickiness) of the cured product surface after curing of the curable composition. This photocurable substance is a substance capable of curing upon irradiation with light. A typical photocurable substance is a substance capable of curing when allowed to stand at an indoor place in the sun (near a window) at room temperature for 1 day, for example.

A large number of compounds of this type are known, including organic monomers, oligomers, resins, and compositions containing them, and they are not particularly restricted in kind but include, for example, unsaturated acrylic compounds, vinyl cinnamate polymers, azidated resins and the like.

As the unsaturated acrylic compounds, there may be specifically mentioned, for example, (meth) acrylate esters of low-molecular-weight alcohols such as ethylene glycol, glycerol, trimethylolpropane, pentaerythritol and neopentyl alcohol, (meth) acrylate esters of alcohols derived from acids such as bisphenol A, acids such as isocyanuric acid or such low-molecular-weight alcohols as mentioned above by modification with ethylene oxide and/or propylene oxide, (meth)acrylate esters of hydroxyl-terminated polyether polyols whose main chain is a polyether, polymer polyols obtained by radical polymerization of a vinyl monomer (s) in a polyol whose main chain is a polyether, hydroxyl-terminated polyester polyols whose main chain is a polyester, polyols whose main chain is a vinyl or (meth) acrylic polymer and which have hydroxyl groups in the main chain, and like polyols, epoxy acrylate oligomers obtained by reacting a bisphenol A-based, novolak type or other epoxy resin with (meth)acrylic acid, urethane acrylate type oligomers containing urethane bonds and (meth)acryl groups within the molecular chain as obtained by reacting a polyol, a polyisocyanate and a hydroxyl group-containing (meth)acrylate, for example, and the like.

The vinyl cinnamate polymers are photosensitive resins whose cinnamoyl groups function as photosensitive groups and include cinnamic acid-esterified polyvinyl alcohol species and various other polyvinyl cinnamate derivatives.

The azidated resins are known as photosensitive resins with the azido group serving as a photosensitive group and generally include photosensitive rubber solutions with an azide compound added as a photosensitive substance and, further, detailed examples are found in "Kankosei Jushi (Photosensitive Resins)" (published March 17, 1972 by Insatsu Gakkai Shuppanbu, pages 93 ff, 106 ff, 117 ff). These can be used either singly or in admixture, with a sensitizer added, if necessary.

Among the photocurable substances mentioned above, unsaturated acrylic compounds are preferred in view of their easy handleability.

The photocurable substance is preferably added in an amount of 0.01 to 20 parts by weight per 100 parts by weight of the sum of the components (A) and (B) according to the invention. At addition levels below 0.01 part by weight, the effects will be insignificant and, at levels exceeding 20 parts by weight, the physical properties may be adversely affected. The addition of a sensitizer such as a ketone or nitro compound or a promoter such as an amine can enhance the effects in some instances.

In the curable composition of the invention, there may be incorporated an air oxidation-curable substance, if necessary. The air oxidation-curable substance is a compound containing an unsaturated group capable of being crosslinked for curing by oxygen in the air. By adding such air oxidation-curable substance, it becomes possible to reduce the tack (stickiness) of the cured product surface on the occasion of curing of the curable composition. The air oxidation-curable substance in the practice of the invention is a substance capable of curing upon contacting with air and, more specifically, has a property such that it cures as a result of reaction with oxygen in the air. A typical air oxidation-curable substance can be cured upon allowing it to stand in the air in a room for 1 day, for example.

As specific examples of the air oxidation-curable substance, there may be mentioned, for example, drying oils such as tung oil and linseed oil, various alkyd resins obtained by modification of such drying oils, drying oil-modified acrylic polymers, epoxy resins, silicone resins, 1,2-polybutadiene, 1,4-polybutadiene, C5-C8 diene polymers and copolymers and, further, various modifications of such polymers and copolymers (e.g. maleinated modifications, boiled oil modifications). Among these, tung oil, liquid ones among the diene polymers (liquid diene polymers) and modifications thereof are particularly preferred.

As specific examples of the liquid diene polymers, there may be mentioned, for example, liquid polymers obtained by polymerization or copolymerization of diene compounds such as butadiene, chloroprene, isoprene and 1,3-pentadiene, NBR, SBR and like polymers obtained by copolymerization of such diene compounds (as main components) with a monomer copolymerizable therewith, such as acrylonitrile or styrene, and, further, various modification thereof (e.g. maleinated modifications, boiled oil modifications). These may be used singly or two or more of them may be used in combination. Among these liquid diene compounds, liquid polybutadiene species are preferred.

The air oxidation-curable substances may be used singly or two or more of them may be used in combination.

The use of a catalyst capable of promoting the oxidation curing or a metal drier in combination with the air oxidation-curable substance can enhance the effects in certain instances. As such catalysts or metal driers, there may be mentioned, for example, metal salts such as cobalt naphthenate, lead naphthenate, zirconium naphthenate, cobalt octylate and zirconium octylate, amine compounds, and the like.

The air oxidation-curable substance is preferably added in an amount of 0.01 to 20 parts by weight per 100 parts by weight of the sum of the components (A) and (B) according to the invention. At levels below 0.01 part by weight, the effects will be insignificant and, at levels exceeding 20 parts by weight, the physical properties may be adversely affected.

In the curable composition of the invention, there may be incorporated an antioxidant, if necessary. Various antioxidants are known and mention may be made of various species described, for example, in "Sankaboshizai Handbook (Handbook of Antioxidants)" published by Taiseisha LTD. and "Kobunshi Zairyo no Rekka to Anteika (Degradation and Stabilization of Polymer Materials)" (pp. 235-242) published by CMC Publishing CO., LTD. The antioxidants which can be used are not limited to these, however. As specific examples, there may be mentioned, for example, thioethers such as MARK PEP-36 and MARK AO-23 (both being products of Asahi Denka Co., Ltd.) , phosphorus-containing antioxidants such as IRGAFOS 38, IRGAFOS 168 and IRGAFOS P-EPQ (the three being products of Ciba Specialty Chemicals). For example, such hindered phenol compounds as enumerated below are preferred.

As specific examples of the hindered phenol compounds, the following can be mentioned.

2,6-Di-tert-butyl-4-methylphenol, 2,6-di-tert-butyl-4-ethylphenol, mono(or di or tri)(α-methylbenzyl)phenol, 2,2'-methylenebis(4-ethyl-6-tert-butylphenol), 2,2'-methylenebis (4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], 2,4-bis(n-octylthio)-6-(4-hydroxy-3,5-di-tert-butylanilino) -1,3,5-triazine, pentaerythrityl tetrakis[3-(3,5-di-tert-butyl-4-hydroxyphenyl)propionate], 2,2-thiodiethylenebis[3-(3,5-di-tert-butyl-4-hydroxyphenyl) propionate], octadecyl-3-(3,5-di-tert-butyl-4-hydroxyphenyl)propionate, N,N'-hexamethylenebis (3,5-di-tert-butyl-4-hydroxyhydrocinnamide), diethyl 3,5-di-tert-butyl-4-hydroxybenzylphosphonate, 1,3,5-trimethyl-2,4,6-tris (3,5-di-tert-butyl-4-hydroxybenzyl)benzene, bis(ethyl 3,5-di-tert-butyl-4-hydroxybenzylphosphonato)calcium, tris(3,5-di-tert-butyl-4-hydroxybenzyl)isocyanurate, 2,4-2,4-bis[(octylthio)methyl]-o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)benzotriazole, methyl 3-[3-tert-butyl-5-(2H-benzotriazol-2-yl)-4-hydroxyphenyl] propionate-polyethylene glycol (molecular weight about 300) condensate, hydroxyphenylbenzotriazole derivatives, bis(1,2,2,6,6-pentamethyl-4-piperidyl) 2-(3,5-di-tert-butyl-4-hydroxybenzyl)-2-n-butylmalonate, 2,4-di-tert-butylphenyl-3,5-di-tert-butyl-4-hydroxybenzoate, and the like.

Examples of the relevant product names include, but are not limited to, Nocrac 200, Nocrac M-17, Nocrac SP, Nocrac SP-N, Nocrac NS-5, Nocrac NS-6, Nocrac NS-30, Nocrac 300, Nocrac NS-7 and Nocrac DAH (all being products of Ouchi Shinko Chemical Industrial Co., Ltd.) , Mark AO-30, Mark AO-40, Mark AO-50, Mark AO-60, Mark AO-616, Mark AO-635, Mark AO-658, Mark AO-80, Mark AO-15, Mark AO-18, Mark AO-328 and Mark AO-37 (all being products of Asahi Denka Co., Ltd.), IRGANOX 245, IRGANOX 259, IRGANOX 565, IRGANOX 1010, IRGANOX 1024, IRGANOX 1035, IRGANOX 1076, IRGANOX 1081, IRGANOX 1098, IRGANOX 1222, IRGANOX 1330 and IRGANOX 1425WL (all being products of Ciba Specialty Chemicals), and Sumilizer GM and Sumilizer GA-80 (both being products of Sumitomo Chemical Co., Ltd.).

The antioxidant may be used in combination with a light stabilizer (to be mentioned later herein), and such combined use enhances the effects thereof and, in particular, may improve the heat resistance, hence is particularly preferred. Such ready-made mixtures of an antioxidant and a light stability as TINUVIN C353 and TINUVIN B75 (both being products of Ciba Specialty Chemicals) and the like may also be used.

The antioxidant addition level is preferably within the range of 0.1 to 10 parts by weight per 100 parts by weight of the sum of the components (A) and (B) according to the invention. At levels below 0.1 part by weight, the weather resistance-improving effect is insignificant, while levels exceeding 10 parts by weight make no great difference in effect any longer, hence are economically disadvantageous.

In the curable composition of the invention, there may be incorporated a light stabilizer, if necessary. Various light stabilizers are known and mention may be made of various species described, for example, in "Sankaboshizai Handbook (Handbook of Antioxidants)" published by Taiseisha LTD, and "Kobunshi Zairyo no Rekka to Anteika (Degradation and Stabilization of Polymer Materials)" (pp. 235-242) published by CMC Publishing CO., LTD. The light stabilizers which can be used are not limited to these, however.

Among the light stabilizers, ultraviolet absorbers are preferred. As specific examples, there may be mentioned, for example, benzotriazole compounds such as TINUVIN P, TINUVIN 234, TINUVIN 320, TINUVIN 326, TINUVIN 327, TINUVIN 329 and TINUVIN 213, triazines such as TINUVIN 1577, benzophenones such as CHIMASSORB 81, benzoate compounds such as TINUVIN 120 (all being products of Ciba Specialty Chemicals), and the like.

Hindered amine compounds are also preferred. Examples are dimethyl succinate-1-(2-hydroxyethyl)-4-hydroxy-2,2,6,6 -tetramethylpiperidine polycondensate, poly[{6-(1,1,3,3-tetramethylbutyl)amino-1,3,5-triazine-2,4-diyl} {(2,2,6,6-tetramethyl-4-piperidyl)imino}], N,N'-bis(3-aminopropyl)ethylenediamine-2,4-bis [N-butyl-N-(1,2,2,6,6-pentamethyl-4-piperidyl)amino]-6-chloro-1,3,5-triazine condensate, bis(2,2,6,6-tetramethyl-4-piperidyl) sebacate, bis(2,2,6,6-tetramethyl-4-piperidinyl)succinate and the like.

Examples of the relevant product names include, but are not limited to, TINUVIN 622LD, TINUVIN 144, CHIMASSORB 944LD, CHIMASSORB 119FL and IRGAFOS 168 (all being products of Ciba Specialty Chemicals), Mark LA-52, Mark LA-57, Mark LA-62, Mark LA-67, Mark LA-63, Mark LA-68, Mark LA-82 and Mark LA-87 (all being products of Asahi Denka Co., Ltd.), and Sanol LS-770, Sanol LS-765, Sanol LS-292, Sanol LS-2626, Sanol LS-1114, Sanol LS-744 and Sanol LS-440 (all being products of Sankyo Co., Ltd.) , and the like.

The combined use of an ultraviolet absorber and a hindered amine compound may produce enhanced effects and, therefore, both may be used in combination without any particular restriction, and the combined use is sometimes favorable.

The light stabilizer may be used in combination with the antioxidant mentioned above, and such combined use enhances the effects thereof and, in particular, may improve the weather resistance, hence is particularly preferred. Such ready-made mixtures of a light stabilizer and an antioxidant as TINUVIN C353 and TINUVIN B75 (both being products of Ciba Specialty Chemicals) and the like may also be used.

The light stabilizer addition level is preferably within the range of 0.1 to 10 parts by weight per 100 parts by weight of the sum of the components (A) and (B) according to the invention. At levels below 0.1 part by weight, the weather resistance-improving effect is insignificant, while levels exceeding 10 parts by weight make no great difference in effect any longer, hence are economically disadvantageous.

I f necessary, one or more of various additives may be added to the curable composition of the invention for the purpose of adjusting various physical properties of the curable composition or cured products. Such additives include, for example, flame retardants, curability modifiers, antioxidants, radical scavengers, metal deactivators, antiozonants, phosphorus-containing peroxide decomposers, lubricants, pigments, blowing agents, photocurable resins and the like. These various additives may be used singly or two or more of them may be used in combination.

Specific examples of such additives are described, for example in Japanese Kokoku Publication Hei-04-69659, Japanese Kokoku Publication Hei-07-108928, Japanese Kokai Publication Sho-63-254149 and Japanese Kokai Publication Sho-64-22904.

The curable composition of the invention may be prepared as a one package formulation, which is to be cured by the moisture in the air after application, by compounding all the components/ingredients and tightly sealing in a container for storage, or as a two-pack type formulation by separately preparing a curing agent by compounding a curing catalyst, a filler, a plasticizer, water and the like, so that such composition and the polymer composition may be mixed together prior to use. In the case of such two-pack type, a colorant or colorants can be added on the occasion of mixing of the two compositions. Thus, in providing sealants matching in color to the given siding boards, for example, a wide assortment of colors become available with limited stocks and thus it becomes easy to cope with the market demand for many colors; this is more favorable for low buildings and the like. By mixing the colorant or colorants, for example a pigment or pigments, with a plasticizer and/or a filler, as the case may be, and using the thus-prepared paste, it becomes possible to facilitate the working process. Furthermore, it is possible to finely adjust the curing rate by adding a retarder on the occasion of mixing up the two compositions.

The fields of application of the curable composition of the invention include, but are not limited to, those fields of application in the building and other industries, and the composition can be used as a sealant in the building industry, a sealant for double glazing, a sealant for vehicles or the like, for example. In particular, it is useful as a sealant for exterior works on buildings for which weather resistance, dust adhesion prevention and rain trace staining prevention are required.

### BEST MODE FOR CARRYING OUT THE INVENTION

The following examples illustrate the present invention in further detail. These examples are, however, by no means limitative of the scope of the invention.

### (Synthesis Example 1)

In a nitrogen atmosphere, a solution of 14.5 g of methyl methacrylate, 68.5 g of butyl acrylate, 15 g of stearyl methacrylate, 2 g of γ-methacryloxypropylmethyldimethoxysilane and 0.5 of 2, 2' -azobis (2-methylbutyronitrile) in 20 g of toluene was added dropwise to 50 g of toluene heated at 105°C over 5 hours and, thereafter, the resulting mixture was heated with stirring for 1 hour to give a toluene solution of a (meth) acrylic acid alkyl ester polymer (polymer 1; Tg: -41°C) having a polystyrene equivalent number average molecular weight of about 18, 000 and containing at least one reactive silyl group in each molecule on the average.

### (Synthesis Example 2)

A pressure-resistant glass reaction vessel equipped with a stirrer was charged with 500 g of allyl group-terminated linear polypropylene glycol (number average molecular weight: 20,000) the main chain of which had been obtained using a composite metal cyanide complex catalyst and 10 g of hexane, followed by azeotropic dehydration at 90°C. After distilling off the hexane under reduced pressure and the subsequent nitrogen substitution, 20 µl of a chloroplatinic acid catalyst [5% (by weight as platinum) solution in isopropanol] was added and, then, 4.6 g of dimethoxymethylsilane was added dropwise gradually thereto with stirring. Thereafter, the reaction was allowed to proceed at 90°C for 2 hours and then the unreacted dimethoxymethylsilane was distilled off under reduced pressure to give a polyoxypropylene polymer (polymer 2) containing at least one terminal reactive silyl group.

The polymer 2 and the polymer 1 obtained in Synthesis Example 1 were mixed together at a solid matter-based weight ratio of 70/30 and the solvent was then distilled off to give a polymer mixture.

### (Example 1)

The polymer mixture obtained in Synthesis Example 2 (100 parts by weight), 55 parts by weight of polypropylene glycol with a number average molecular weight of 3,000 (as a plasticizer), 120 parts by weight of calcium carbonate (Shiraishi Kogyo Kaisha, Ltd.; product name: Hakuenka CCR) , 20 parts by weight of titanium oxide (Ishihara Sangyo Kaisha Ltd.; product name: Tipaque R-820) , 2 parts by weight of a thixotropic agent (Kusumoto Chemicals, Ltd.; product name: DISPARON #6500), 1 part by weight of an ultraviolet absorber (Ciba Specialty Chemicals; product name: TINUVIN 327), 1 part by weight of a light stabilizer (Sankyo Co., Ltd.; product name: Sanol LS770) and 3 parts by weight of a sulfate ester salt type anionic surfactant (Kao Corporation; product name: EMAL 2F (sodium lauryl sulfate) were weighed and mixed up and, after through kneading, the mixture was passed three times through a small-size three-roll paint mill. Thereafter, 2 parts by weight of vinyltrimethoxysilane (Nippon Unicar Company Limited; product name: A-171), 3 parts of an aminosilane compound (Nippon Unicar Company Limited; product name: A-1120) and 2 parts by weight of a curing agent (Nitto Kasei Co., Ltd.; product name: Neostann U-220) were added thereto, followed by kneading to give a curable composition (composition 1).

### (Example 2)

A curable composition (composition 2) was obtained in the same manner as in Example 1 except that 3 parts by weight of a fluorine-containing surfactant (JEMCO Inc.; product name: EF-102 (potassium perfluorooctanesulfonate) was added instead of EMAL 2F.

### (Example 3)

A curable composition (composition 3) was obtained in the same manner as in Example 1 except that 3 parts by weight of a fluorine-containing surfactant (JEMCO Inc.; product name: EF-103 (sodium perfluorooctanesulfonate) was added instead of EMAL 2F.

### (Example 4)

A curable composition (composition 4) was obtained in the same manner as in Example 1 except that 3 parts by weight of a fluorine-containing surfactant (JEMCO Inc.; product name: EF-104 (ammonium perfluorooctanesulfonate) was added instead of EMAL 2F.

### (Example 5)

A curable composition (composition 5) was obtained in the same manner as in Example 1 except that 6 parts by weight of a nitrogen-containing cationic surfactant (Nippon Nyukazai Co., Ltd.; product name: TEXNOL IL55 (alkylimidazoline) was added instead of EMAL 2F.

### (Comparative Example 1)

A curable composition (composition 6) was obtained in the same manner as in Example 1 except that the sulfate ester salt type anionic surfactant was not added.

### (Evaluation for dust adhesion and rain trace contamination)

Each of the composition 1 obtained in Example 1 and the composition 6 obtained in Comparative Example 1 was packed in a mold with a thickness of 3 mm and allowed to stand at 23°C for 3 days and then heated at 50°C for 4 days to give a rubber-like cured product. An evaluation sample, 35 mm x 60 mm, was cut out from this rubber-like cured sheet and subjected to dust adhesion evaluation by exposure to streams of rainwater.

By saying "exposure to streams of rainwater", the method of exposure for promoting dust adhesion is meant which comprises sticking the evaluation sample to an aluminum substrate (100 mm x 300 mm x 1 mm), maintaining the sample to be exposed vertically and exposing the sample to streams of dust-containing contaminated rainwater as allowed to flow down on the surface thereof from above via a corrugated aluminum sheet.

The results of 5 months of exposure to rainwater streams are shown in Table 1. The results of initial residual tack, Ascar A hardness, Persoz hardness, and color difference-based dust adhesion state measurements are also shown in Table 1.

**Table 1**

| | | Example 1 | Comp. Exam. 1 |
|---|---|---|---|
| Sulfate ester salt type anionic surfactant | | 3 weight parts | **-** |
| Initial residual tack | | Bad | Bad |
| Ascar A hardness | | 14.2 | 10.6 |
| Persoz hardness | | 17 | 16 |
| After 5 months of exposure to rainwater streams | Contamination judged by visual observation | Excellent | Bad |
| | Dust adhesion (color difference ΔL between pre-and post-exposure values) | 5.23 | 19.06 |

Sulfate ester salt type anionic surfactant:
EMAL 2F(product of Kao Corporation) [sodium lauryl sulfate]
Initial residual tack:
After 7 days of curing of the curable composition at 23°C, the tack of the cured product surface was evaluated by touching with a finger.
<Evaluation criteria>
Bad: High level of tackiness, sticky to the finger.
Good: Medium level of tackiness, slightly sticky to the finger.
Fair: Good level, almost no tackiness.
Persoz hardness:
A pendulum was allowed to swing on balls on the sealant surface, and the number of oscillations was counted. (The greater the number of oscillations made by the pendulum is, the higher the hardness is.)
Dust adhesion:
The difference in hue on the evaluation sample surface between the value before and the value after exposure to streams of rainwater.
ΔL = (hue before exposure (L1)) - (hue after exposure (L2))
(The smaller the ΔL value is, the smaller the change in hue between the value before and the value after exposure is, namely the less the extent of dust adhesion is.)

### Contamination judged by visual observation

- Excellent:: Condition almost free of any contaminant on the sealant surface even under gaze.
- Fair:: Condition of slight uniform contamination on the sealant surface, the contamination being hardly distinguishable at a distance, however.
- Good:: Level of slight contamination with confidence even at a distance.
- Bad:: Level of distinct contamination even at a distance.

Each of the compositions 2 to 5 respectively obtained in Examples 2 to 5 and the composition 6 obtained in Comparative Example 1 was packed in a mold with a thickness of 3 mm and allowed to stand at 23°C for 3 days and then heated at 50°C for 4 days to give a rubber-like cured sheet. An evaluation sample, 35 mm x 60 mm, was cut out from this rubber-like cured sheet and subjected to JIS 45° exposure for confirming the dust adhesion feature of the sealant.

The results obtained after 9 months of JIS 45° exposure are shown in Table 2. The results of initial residual tack, Ascar A hardness, Persoz hardness, and color difference-based dust adhesion state measurements are also shown in Table 2.

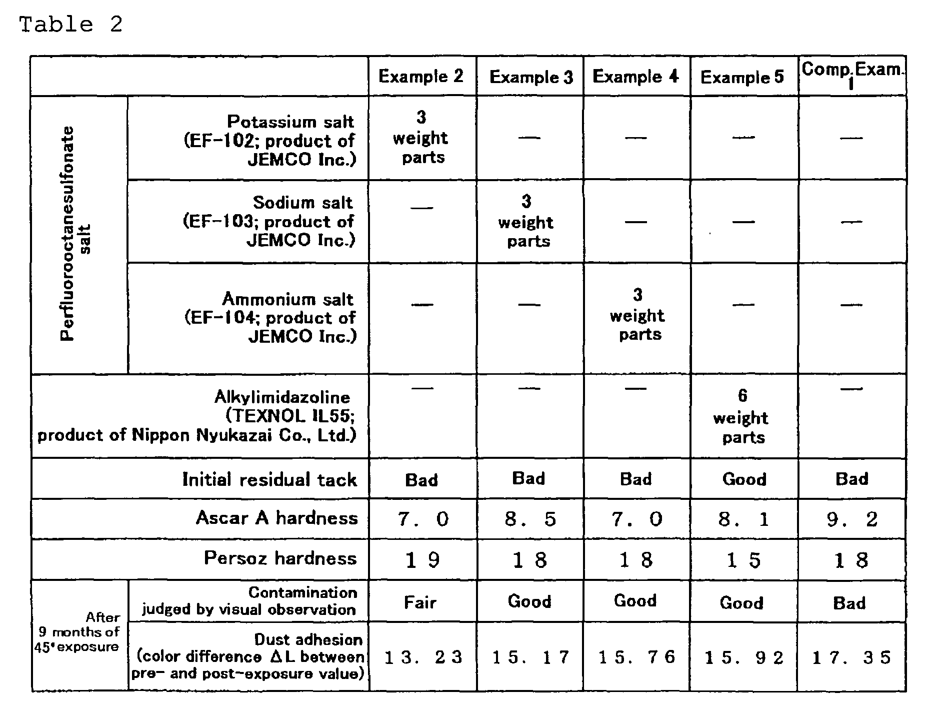

The experiments in Example 1 and Examples 2 to 5 were carried out on different occasions and, therefore, the samples of Comparative Example 1 were prepared twice (for comparison with Example 1 and for comparison with Examples 2 to 5) . And, the two polymer mixtures of Synthesis Example 2 as used in the two series of experiments were separately prepared. It seems that both mixtures were subtly different in molecular weight and reactive silyl group content from each other due to experimental errors. This is because while the two sets of data for the two repetitions of Comparative Example 1 should coincide by nature, differences are found between the results of Comparative Example 1 given in Table 1 and those given in Table 2.

### INDUSTRIAL APPLICABILITY

The present invention can provide a curable composition useful in the building industry as a sealant inhibiting dust/dirt adhesion and hardly allowing traces of rain and like stains to leave thereon.

## Claims

1. A curable composition
which comprises the following components (A), (B) and (C) :
Component (A): A polyoxyalkylene polymer containing at least one reactive silyl group at a molecular chain terminus;
Component (B) : A polymer composed of acrylic acid alkyl ester monomer units and/or methacrylic acid alkyl ester monomer units containing, on the average, at least one reactive silyl group in each molecule;
Component (C): An ionic surfactant.

2. The curable composition according to Claim 1 wherein the component (C) ionic surfactant is an anionic surfactant.

3. The curable composition according to Claim 2 wherein the component (C) anionic surfactant is a sulfuric acid ester salt type anionic surfactant.

4. The curable composition according to Claim 3 wherein the component (C) sulfuric acid ester salt type anionic surfactant is a sodium alkyl sulfate type anionic surfactant.

5. The curable composition according to Claim 2 wherein the component (C) anionic surfactant is a fluorine-containing surfactant.

6. The curable composition according to Claim 5 wherein the component (C) fluorine-containing surfactant is a fluorine-containing alkylsulfonic acid salt.

7. The curable composition according to Claim 1
wherein the component (C) ionic surfactant is a cationic surfactant.

8. The curable composition according to Claim 7
wherein the component (C) ionic surfactant is a nitrogen-containing compound.

9. The curable composition according to any one of Claims 1 to 8
wherein the content of the component (C) is 0.1 to 20 parts by weight per 100 parts by weight of the sum of the components (A) and (B).

10. A sealant for buildings
which comprises the curable composition according to any one of Claims 1 to 9.
